# EUROPÄISCHE PATENTSCHRIFT

(11) **EP 2 674 735 B1**
(45) Veröffentlichungstag und Bekanntmachung des Hinweises auf die Patenterteilung: **29.06.2022**
(21) Anmeldenummer: 13164688.7
(22) Anmeldetag: 22.04.2013
(51) Int. Cl.: G01J 5/08, G01J 5/02, G01J 5/07, F24H 3/04, F24H 9/20

(54) **Messeinrichtung sowie Heißluftgebläse mit der Messeinrichtung**
Measuring device and hot air fan with the measuring device
Dispositif de mesure et soufflante d'air chaud dotée du dispositif de mesure

(30) Priorität: 15.06.2012 DE 202012102203 U; 20.07.2012 DE 202012102739 U
(43) Veröffentlichungstag der Anmeldung: 18.12.2013
(73) Patentinhaber: Steinel GmbH, 33442 Herzebrock (DE)
(72) Erfinder: Steinel, Ingo H., 33442 Herzebrock-Clarholz (DE)
(74) Vertreter: Müller Hoffmann & Partner

(56) Entgegenhaltungen:
- WO-A1-98/01730
- US-A- 4 315 150
- US-A1- 2008 090 193
- US-A1- 2008 144 696
- US-A1- 2008 181 590

## Beschreibung

Die Erfindung betrifft eine Messeinrichtung zum berührungslosen Messen einer Oberflächentemperatur, etwa eine pyrometrische Messeinrichtung, sowie ein, vorzugsweise als Heißluftpistole ausgebildetes, Heißluftgebläse mit einer dieser zugeordneten Messeinrichtung.

Messvorrichtungen zur berührungslosen Temperaturerfassung, auch pyrometrische Messeinrichtung genannt, sind aus dem Stand der Technik bekannt, wobei handelsübliche Messeinrichtungen entweder auf dem pyroelektrischen Prinzip beruhende Temperatursensoren (sogenannte Pyro-Sensoren) oder auf dem thermoelektrischen Prinzip beruhende Temperatursensoren (sogenannte Thermopilesensoren) aufweisen.

Dabei basiert der pyroelektrische Effekt auf der durch Temperaturänderung bedingten Änderung der elektrischen Ladung in einem Kristall, wohingegen der thermoelektrische Effekt als Pendant zum Peltiereffekt auf dem Prinzip der temperaturabhängigen Spannungserzeugung durch üblicherweise einer Mehrzahl von in Reihe geschalteten Thermoelementen beruht. Die Gesamtanordnung ist dabei in der Regel im Infrarotbereich sensitiv.

Bei bekannten Messvorrichtungen handelt es sich um eigenständige Geräte, die sich häufig durch einen pistolenartigen Griff auszeichnen, jedenfalls eine Grifffläche zum vergleichsweise komfortablen Tragen bzw. Handhaben aufweisen. Bekannte Messvorrichtungen sind üblicherweise derart konfiguriert, dass der optimale Messabstand zwischen dem Objekt, dessen Oberflächentemperatur zu messen ist, und der Messeinrichtung einen Meter oder mehr beträgt, um einen ausreichenden Abstand zu dem (heißen) Objekt einhalten zu können. Zwar ist eine Temperaturmessung auch in anderen Messabständen möglich, jedoch wird die Messung mit zunehmendem Abstand zum optimalen Abstand, auf den das Gerät ausgelegt ist, ungenauer.

Heißluftgebläse, häufig auch einfach Heißluftpistole genannt, sind Elektrohandwerkzeuge, mit denen die Oberfläche eines Objektes in einen Arbeitsbereich gezielt erwärmt werden kann. Bekannte Heißluftpistolen zeichnen sich durch einen langgestreckten, häufig rohrförmigen Abschnitt aus, der endseitig einen Heißluftauslass, welcher meist von einer Heißluftdüse gebildet wird aufweist. Winklig zu diesem Abschnitt erstreckt sich ein Griffbereich, der dem Heißluftgebläse die Pistolenform bzw. Föhnform verleiht. Zum Erzeugen eines Luftstroms ist in dem Heißluftpistolengehäuse ein Gebläse vorgesehen, mit dem Umgebungsluft angesaugt wird, die dann mittels eines Heizelementes erhitzt und durch die Heißluftauslassöffnung eines Austrittsrohres ausgeblasen wird. Die Luftdurchflussmenge ist je nach Bauart unterschiedlich und beträgt häufig zwischen etwa 150 bis 500 I/min, wobei häufig Temperaturen in einem Bereich zwischen etwa 50°C und 650°C eingestellt werden können - in der Regel Temperaturen oberhalb von 200°C. Da Heißluftpistolen im Vergleich beispielsweise zu einer Lötlampe ohne Flamme Wärme in ein Objekt einbringen können, ist es möglich, brennbare Materialien mit geringerem Gefahrenpotential zu bearbeiten. Heißluftpistolen können für die unterschiedlichsten Einsatzzwecke eingesetzt werden, beispielsweise zur Verformung von Kunststoff, zum Verschweißen von Kunststoffen, zum Entfernen von Lack- oder Farbschichten, zum Entlöten, zum Desinfizieren, zum Trocknen, Enteisen oder Anzünden. Hochwertige Heißluftpistolenmodelle umfassen heute teilweise eine Temperaturanzeige, auf der die Temperatur der ausgeblasenen Heißluft angezeigt wird. Für den Benutzer ist hieraus kein unmittelbarer Rückschluss auf die Temperatur der erhitzten Oberfläche möglich. Dies ist insbesondere bei vergleichsweise empfindlichen Oberflächen problematisch, bei denen eine definierte Maximaltemperatur nicht überschritten werden darf bzw. sollte, beispielsweise weil sie bei Überschreiten der Temperatur schmelzen, in Brand geraten oder sonstigen physikalischen und/oder chemischen Veränderungen unterliegen.

In anderen Fällen ist problematisch, dass sichergestellt werden soll, dass eine Mindesttemperatur sicher überschritten wird, um einen gewünschten Effekt zu erzielen. Auch gibt es den Fall, das bestimmte Materialien, z.B. Folien in einem definierten Bereich (z.B. zwischen 90°C - 100°C) erhitzt werden müssen, um einen bestimmten Effekt zu erzielen, z.B. um eine gute Haftung bzw. Klebeeigenschaft zu gewährleisten.

Die US 2008/0181590 A1 befasst sich mit Heizpistolen, die einen Temperatursensor zum Messen der Oberflächentemperatur eines zu erhitzenden Werkstücks aufweisen.

Die US 2008/0144696 A1 befasst sich mit Heizpistolen, die mit einem Infrarotthermometer zum Messen der Oberflächentemperatur eines Werkstücks und einer Anzeige für die gemessene Temperatur versehen sind. Die Heizpistole umfasst eine Düse zum Ausstoßen von Heißluft. Das Infrarotthermometer ist neben der Düse verschwenkbar angeordnet und kann dadurch auf zu heizende Objekte in unterschiedlichen Abständen zur Heizpistole ausgerichtet werden. Das Infrarotthermometer kann mit einem Laser zur Kontrolle der Ausrichtung des Infrarotthermometers versehen sein.

Die WO 98/01730 A1 und die US 4 315 150 befassen sich jeweils mit Infrarotthermometern, die eine Zielvorrichtung aus zwei konvergierenden Lichtstrahlen aufweisen, mit der ein Abstand zur zu vermessenden Oberfläche kontrolliert werden kann.

Die US 2008/090193 A1 beschreibt ein Heißluftgebläse sowie eine zugeordnete Messeinrichtung, die zum lösbaren Fixieren an dem Heißluftgebläse vorgesehen ist und zwei Sensoren, nämlich einen Temperatur- und einen Entfernungsmesser, sowie einen Laserpointer aufweist und die dazu ausgebildet ist, ein Werkstück anzuvisieren und dessen Oberflächentemperatur sowie den Abstand zu dem Werkstück zu messen. Dazu ist die Messeinrichtung so an einer Montagehalterung befestigt, dass sie in Aufwärts- und Abwärtsrichtung schwenkbar ist und genau auf ein Werkstück fokussiert werden kann.

Ausgehend von dem vorgenannten Stand der Technik liegt der Erfindung die Aufgabe zugrunde, die Arbeit mit Heißluftgebläsen zu erleichtern, insbesondere Gefährdungen des Benutzers und/oder des zu erhitzenden Objekts zu vermeiden. Insbesondere soll es auf einfache Weise ermöglicht werden ein Überschreiten von unzulässigen Oberflächentemperaturen eines mit einem Heißluftgebläse zu erwärmenden Objektes zu vermeiden, wobei eine möglichst genaue Bestimmung der Oberflächentemperatur am Arbeitspunkt sichergestellt sein soll.

Diese Aufgabe wird mit dem Gegenstand der unabhängigen Ansprüche gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die Erfindung geht von der Überlegung aus, dass es grundsätzlich möglich wäre, die Temperatur der Oberfläche eines mittels eines Hand-Heißluftgebläses, insbesondere mit einer Heißluftpistole, zu erhitzenden, Objektes in einem Arbeitsbereich zu messen, wobei hierzu in der einen Hand das Heißluftgebläse und in der anderen Hand die Messvorrichtung gehalten werden müsste. Dies ist jedoch aus mehreren Gründen problematisch bzw. nicht zielführend.

So würde man in der Praxis das Heißluftgebläse aufgrund seines Gewichtes und aufgrund einer größeren Zielgenauigkeit in der bevorzugten, beispielsweise rechten Arbeitshand halten und wäre folglich gezwungen, die Pyrometer-Messvorrichtung in der jeweils anderen, beispielsweise linken Hand zu halten. Mit dieser gestaltet sich jedoch ein Ziel- und Bedienvorgang im Regelfall schwieriger, wobei das genaue Anvisieren des Arbeitsbereiches wesentlich ist zur Erzielung korrekter Messergebnisse.

Wird beispielsweise nicht der Arbeitsbereich, d.h. ein Hauptauftreffbereich des Heißluftstroms auf der Objektoberfläche mittels der Messvorrichtung anvisiert, führt dies zwingend immer dazu, dass die angezeigte Temperatur geringer ist als die Maximaltemperatur (im Arbeitsbereich) der Objektoberfläche, so dass in der Praxis wohl nicht vermieden werden kann, dass es zu einer unerwünschten Überhitzung, d.h. zu einem unerwünschten Überschreiten einer Maximaltemperatur bzw. Solltemperatur kommen kann. Dies kann wie eingangs erwähnt, eine Schädigung der Oberfläche und schlimmstenfalls, je nach Material, sogar zu einer Gefährdung für den Benutzer führen. Darüber hinaus ist es beim Umgang mit einem Heißluftgebläse für viele Anwendungen unpraktisch die weitere Hand mittels einer Messeinrichtung blockiert zu haben, da die weitere Hand häufig für eine korrekte, genauere und sichere Handhabung notwendig ist, beispielsweise weil mittels dieser Hand das zu erwärmende Objekt (mittels geeigneter Wärmeschutzhandschuhe) gehalten wird, oder weil zusätzliche Werkzeuge zum Ausführen der Arbeiten notwendig sind, wie beispielsweise der Einsatz von mechanischen Werkzeugen zum Bearbeiten der erhitzten Oberfläche, beispielsweise einer Drahtbürste, od.dgl. Darüber hinaus besteht das Problem, dass eine Temperaturanzeige an herkömmlichen pyrometrischen Messvorrichtungen bei der separaten Handhabung zusammen mit einem Heißluftgerät nicht oder nur schwierig einsehbar ist. Werden das Heißluftgebläse und die Messvorrichtung in einer gemeinsamen Hand gehalten (was nur schwer möglich ist), ist ein exaktes Zielen kaum realisierbar.

Auch besteht das Problem, dass mit der separaten Messvorrichtung teilweise ein Arbeitsbereich überhaupt nicht erfassbar ist, beispielsweise wenn mittels des Heißluftgebläses ein Arbeitsbereich innerhalb eines Behälters oder Rohres mit geringer Querschnittsöffnung erhitzt werden soll.

Die vorstehenden Probleme werden durch den in den unabhängigen Ansprüchen angegebenen Gegenstand beseitigt.

Zum Beispiel kann zum Messen der Temperatur einer Oberfläche im Arbeitsbereich eines Heißluftgebläses nicht eine herkömmliche pyrometrische, d.h. auf Entfernung arbeitende Messeinrichtung eingesetzt werden, sondern eine Messeinrichtung, die speziell für den Einsatz mit einem Heißluftgebläse optimiert ist, indem nämlich die Messeinrichtung und deren Fixiermittel so ausgebildet sind, dass die Messeinrichtung derart an einem Heißluftgebläse festlegbar oder festgelegt ist, dass die Messeinrichtung, insbesondere eine Messachse, im an dem Heißluftgebläse festgelegen Zustand, automatisch auf einen Bereich vor dem Heißluftauslass des Heißluftgebläses, nämlich auf einen Arbeitsbereich des Heißluftgebläses, ausgerichtet ist. Mit anderen Worten liegt der Erfindung der Gedanke zugrunde, eine pyrometrische Messeinrichtung so auszubilden, dass diese lösbar mittels Fixiermitteln an dem Heißluftgebläse, nämlich an dessen Gehäuse festlegbar ist, derart, dass sichergestellt ist, dass die Messeinrichtung im dann an dem Heißluftgebläse festgelegten Zustand so ausgerichtet bzw. orientiert ist, dass die Messeinrichtung die Oberflächentemperatur eines mittels des Heißluftgebläses zu bearbeitenden Objektes in einem Bereich vor dem Heißluftgebläse erfassen kann. Durch das Gewährleisten einer ordnungsgemäßen Fixierung an einem Heißluftgebläse wird eine vorteilhafte Einhandbedienmöglichkeit sichergestellt, die es ermöglicht, mit einer einzigen Hand, insbesondere der Arbeitshand, ein Objekt in einem Arbeitsbereich eines Heißluftgebläses zu erhitzen und zugleich die Temperatur der Oberflächen messen und bevorzugt an der Messeinrichtung und/oder an dem Heißluftgebläse, bzw. einem jeweils dort vorgesehenen Display ablesen zu können. Darüber hinaus stellt die entsprechende Gestaltung von Fixiermitteln sicher, dass eine Messachse, entlang derer die Wärmestrahlung zu Messmitteln, insbesondere einem IR-Sensor oder einem Thermopilesensor, d.h. einer Thermosäule, umfassend mindestens ein Thermoelement, vorzugsweise mehrere, bevorzugt hintereinander geschaltete, Thermoelemente innerhalb des Gehäuses der Messeinrichtung gelangen kann, korrekt ausgerichtet ist auf einen Bereich vor dem Heißluftauslass des Heißluftgebläses, nämlich unmittelbar auf den Arbeitsbereich, d.h. den Hauptauftreffbereich der aus dem Heißluftgebläse ausströmenden Heißluft auf das zu erhitzende Objekt.

Um bei einer erfindungsgemäßen Messeinrichtung eine genaue Temperaturbestimmung des zu erhitzenden Objektes sicherzustellen ist weiter erfindungsgemäß eine Zieleinrichtung vorgesehen, die konstruktiv möglicht einfach gelöst ist. Erfindungsgemäß umfasst die Zieleinrichtung Lichtstrahlenerzeugungsmittel, nämlich, wie später noch erläutert werden wird, mindestens zwei beabstandete Lichtquellen, zur Erzeugung von mindestens zwei winklig zueinander verlaufenden Lichtstrahlen, wobei die Lichtstrahlen so zueinander ausgerichtet sind, dass sie sich bei an dem Heißluftgebläse festgelegter Messeinrichtung in einem Bereich vor dem Heißluftgebläse innerhalb der Hauptauslassströmung, insbesondere im Bereich von deren Mittelachse treffen, und zwar in einem Treffpunkt, der gleichzeitig mindestens zwei Bedingungen erfüllt. Und zwar definiert der Treffpunkt zum einen den optimalen Messabstand der Messeinrichtung zu dem Objekt, wobei dieser Messabstand die Entfernung ist, auf die die Messeinrichtung ausgelegt ist. Mit anderen Worten weist das Messergebnis bei diesem Abstand die größte Genauigkeit auf. Des Weiteren liegt der Treffpunkt in einem optimalen Arbeitsabstand des Heißluftgebläses zum Objekt, also in einem Abstand, in dem optimal, d.h. vom Hersteller empfohlen gearbeitet wird, um das Objekt zu erhitzen.

Durch eine derartige Auswahl bzw. Festlegung des Treffpunktes handelt es sich bei der Zieleinrichtung um eine gemeinsame Zieleinrichtung für die Messeinrichtung und das Heißluftgebläse. Bevorzugt wird der Arbeitsabstand gemessen entlang der Längsachse der Hauptauslassströmung. Der Messabstand wird bevorzugt gemessen entlang einer Achse (Strahlengangachse oder Messachse) zwischen dem zu messenden Objekt und einem Strahlungseinlass in der Messeinrichtung. Bevorzugt liegt der Treffpunkt, wie erwähnt, auf der Längsachse, insbesondere einer Längsmittelachse der Hauptauslassströmung des Heißluftgebläses. Die Messeinrichtung ist dabei derart augelegt bzw. konfiguriert, dass in einem vom Gerätehersteller vorgegebenen optimalen Arbeitsabstand ein Messoptimum vorliegt, dergestalt, dass in diesem Punkt und/oder in angrenzenden Bereichen genauste bauartbedingte Messergebnisse geliefert werden.

Die vorgeschlagene kombinierte Zieleinrichtung zum gleichzeitigen Finden des optimalen Arbeitsabstandes und des optimalen Messpunktes bzw. Messabstandes ist einfach auch für Laien zu bedienen, da von dem Benutzer intuitiv erkannt wird, wenn der Treffpunkt nicht auf der Objektoberfläche liegt, da der Benutzer in diesem Fall auf dem Objekt einzelne (mehrere) beabstandete Lichtflecke sieht, die sich je nach Bewegungsrichtung des Heißluftgebläses mit der Messeinrichtung relativ zu dem Objekt annähern oder voneinander entfernen. Der optimale Arbeitsabstand und damit gleichzeitig der optimale Messabstand werden eingehalten, wenn der (eine) Treffpunkt auf der zu erhitzenden Oberfläche des Objektes sichtbar ist. Ganz besonders bevorzugt beträgt der Arbeitsabstand, also der entlang der Längsachse der Hauptauslassströmung gemessene Abstand zwischen dem Heißluftgebläse und dem Objekt zwischen etwa 1cm und etwa 30cm, vorzugsweise zwischen etwa 2cm und etwa 20cm. Ganz besonders bevorzugt ist es, wenn dieser Abstand zwischen etwa 2cm und etwa 15cm, weiter bevorzugt zwischen etwa 5cm und etwa 15cm, weiter bevorzugt zwischen etwa 5cm und etwa 10cm, ganz besonders bevorzugt zwischen etwa 5cm und etwa 7cm beträgt.

Der hierauf ausgelegte optimale Messabstand kann von dem Arbeitsabstand aufgrund der Anordnung der Messeinrichtung abweichen und wird im Regelfall etwas größer sein als der Arbeitsabstand.

Bevorzugt ist die Messeinrichtung derart ausgelegt und angeordnet, dass der Messabstand zwischen Treffpunkt und Messeinrichtung, insbesondere dem Strahlungseinlass der Messeinrichtung deutlich weniger als 60cm, insbesondere auch weniger als 50cm, noch weiter bevorzugt weniger als 40cm beträgt, wobei die genaue Entfernung abhängig ist von Ort der Positionierung am Heißluftgebläse.

Wie eingangs bereits angedeutet gibt es unterschiedliche konstruktive Ausgestaltungsmöglichkeiten zur Bildung der Lichtstrahlenerzeugungsmittel. Denkbar ist es, eine einzige Lichtquelle vorzusehen und aus der abgestrahlten Lichtstrahlung zwei oder mehr Lichtstrahlen über eine geeignete Optik zu erzeugen. Bevorzugt ist es jedoch, wenn mehrere Lichtquellen zur Erzeugung jeweils eines Lichtstrahls vorgesehen sind, wobei als Lichtquellen insbesondere LEDs zum Einsatz kommen oder alternativ Laserstrahlquellen, insbesondere Laser-LEDs. Zur Bündelung bzw. Fokussierung des Lichtes unterschiedlicher Lichtquellen kann es sinnvoll sein, entsprechende Linsen vorzusehen.

Besonders bevorzugt ist es, wenn eine Messachse der Messeinrichtung, entlang derer bevorzugt der Messabstand zwischen Treffpunkt und Messeinrichtung zu messen ist, die Hauptauslassströmung, insbesondere deren Längsachse, noch weiter bevorzugt deren Längsmittelachse in dem Treffpunkt trifft oder schneidet.

Wie erwähnt, ist es möglich, das Heißluftgebläse in Pistolen- bzw. Föhnform, d.h. als Heißluftpistole auszubilden. Alternativ ist es möglich, das Heißluftgebläse pistolengrifffrei auszugestalten, insbesondere indem sich ein hitzegeschützter Griffabschnitt des Heißluftgebläses entlang einer das vordere und das hintere Ende des Heißluftgebläses verbindenden, vorzugsweise innerhalb des Gehäuses verlaufenden, gedachten Achse erstreckt, sowie in Umfangsrichtung, zumindest über einen Umfangsabschnitt um diese Achse herum. Bevorzugt erstreckt sich dabei der Griffabschnitt des Heißluftgebläses über mindestens 30%, vorzugsweise über mindestens 40%, noch weiter bevorzugt über mindestens 50% der Axialerstreckung der Achse. Ganz besonders zweckmäßig ist es dabei, wenn das Gehäuse bei einer pistolengrifffreien Ausgestaltung derart konturiert ist, dass das Heißluftgebläse in einem gedachten Kreiszylinder aufnehmbar ist, dessen Durchmesser kleiner ist, als der 1,5-fache, vorzugsweise als der 1,3-fache, weiter bevorzugt als der 1,1-fache Durchmesser des Gehäuses auf axialer Höhe des ersten Drittels oder auf axialer Höhe der Hälfte der Längserstreckung des Gehäuses entlang der vorerwähnten Achse. Ganz besonders bevorzugt ist es dabei, wenn Leitmittel zum Leiten des Luftstroms innerhalb des Gehäuses zumindest abschnittsweise entlang der vorerwähnten Achse angeordnet sind, vorzugsweise derart, dass der hitzegeschützte, insbesondere von den Leitmitteln über einen Spalt oder über Isolationsmaterial beabstandeten, Griffabschnitt von dem Luftstrom axial durchströmbar ist. Bevorzugt ist mindestens eine Ansaugöffnung zum Ansaugen von Luft im Bereich des Griffabschnittes oder axial hinter dem Griffabschnitt angeordnet. Durch den Verzicht auf den Pistolengriff wird das Heißluftgebläse funktionaler gestaltet und kann auch in schlecht zugänglichen Positionen oder Arbeitsbereichen eingesetzt werden, insbesondere wenn das Gehäuse mit einer pyrometrischen Messeinrichtung kombiniert ist, indem die pyrometrische Messeinrichtung auf das Gehäuse aufgesteckt oder in das Heißluftgebläse integriert ist.

Grundsätzlich gibt es zwei alternative Möglichkeiten zur Ausgestaltung der Messeinrichtung. Gemäß einer ersten Alternative handelt es sich bei der Messeinrichtung (pyrometrischen, d.h. auf Entfernung arbeitenden) um ein in Bezug auf das Heißluftgebläse autarkes, nämlich aufsteckbares Gerät, welches vorzugsweise eine eigene Spannungsversorgung, insbesondere eine eigene Batterie und/oder einen eigenen Akkumulator aufweist. Auch ist es möglich, dass ein integriertes Netzteil vorgesehen ist, das über ein dann vorgesehenes Anschlusskabel mit einem Externstromnetz verbindbar ist. Zusätzlich oder alternativ zu einer eigenen (integralen) Spannungsversorgung kann auch eine Schnittstelle zum Heißluftgebläse vorgesehen werden, um die Energie von diesem zu beziehen. Das autarke Gerät umfasst bevorzugt eine eigene (Soll-) Temperatureinstellungsmöglichkeit (Eingabemittel) und/oder eine eigene Temperaturanzeige (Anzeigemittel) zur Anzeige der gemessenen Temperatur.

Vorzugsweise ist das autarke Gerät mit später noch zu erläuternden Warn- und/oder Anzeigemitteln, insbesondere LEDs ausgestattet, um ein Unterschreiten und/oder Überschreiten und/oder Einhalten einer vorgegebenen und/oder vorgebbaren Solltemperatur oder eines Temperaturbereichs ermöglichen.

Gemäß einer zweiten Alternative handelt es sich bei der Messeinrichtung um ein nicht vollständig autarkes Gerät, welches ebenfalls auf ein Heißluftgebläse aufsteckbar ist. Dieses nicht autarke Gerät hat vorzugsweise keine eigene Spannungsversorgung, insbesondere keine eigene Batterie und/oder keinen Akkumulator, sondern bezieht seinen Betriebsstrom von dem Heißluftgebläse, vorzugsweise über eine entsprechende Schnittstelle. Bevorzugt weist das nicht autarke Gerät keine eigenen Temperaturanzeigemittel und/oder kein (sonstiges) Display auf, sondern ist entsprechend signalleitend mit Anzeigemitteln des Heißluftgebläses verbunden oder verbindbar. Vorzugsweise erfolgt eine Solltemperaturvorgabe ebenfalls über entsprechende Einstellmittel am Heißluftgebläse. Hierdurch ist es möglich gegebenenfalls bereits vorhandene Temperatureinstellmittel und/oder Anzeigemittel des Heißluftgebläses (mit-) zu nutzen. Ganz besonders zweckmäßig ist dabei eine Ausführungsform, bei der sich das Heißluftgebläse über die Messeinrichtung steuern lässt, insbesondere derart, dass eine vorgegebene und/oder vorgebbare (Soll-) Temperatur gehalten bzw. nicht unter- und/oder überschritten wird.

Insbesondere wird mittels entsprechender Steuermittel der Messeinrichtung hierzu die, vorzugsweise elektrische, Heizeinrichtung entsprechend angesteuert.

Ganz besonders bevorzugt ist es, wenn eine, vorzugsweise senkrecht auf einer ggf. vorgesehenen, den Messmitteln zugeordneten Linse und/oder senkrecht auf den Messmitteln, insbesondere einem IR-Sensor stehende Messachse der Messeinrichtung eine Hauptauslassströmung (Hüllbereich um eine Hauptströmungsachse, vorzugsweise mit einem Radius von kleiner 2 cm) der Heißluft in dem optimalen, vom Hersteller definierten Arbeitsabstand des Heißluftgebläses zum Objekt trifft oder schneidet. Im Idealfall gemäß der vorliegenden Erfindung kreuzt, d.h. schneidet die Messachse eine Heißluftströmungsmittelachse (Hauptströmungsachse) in dem Arbeitsabstand, nämlich in dem Treffpunkt der mindestens zwei Lichtstrahlen.

Grundsätzlich ist es möglich, die Messeinrichtung mit einem pyroelektrischen Sensor zur berührungslosen Temperaturmessung auszustatten.

Besonders bevorzugt ist jedoch der Einsatz eines Thermopilesensors, der bevorzugt eine Photodiode, insbesondere eine IR-Diode umfasst, die auf den bevorzugten Temperaturbereich optimiert bzw. ausgelegt ist. Ganz besonders bevorzugt ist die Messeinrichtung zum Messen von Oberflächentemperaturen aus einem Temperaturbereich zwischen 20°C und 700°C, bevorzugt von über 350°C und/über 450°C und/über 600°C ausgebildet.

Für eine erfindungsgemäße Ausführungsform, bei der die Messeinrichtung nicht einteilig mit dem Heißluftgebläse ausgebildet ist, in dem beispielsweise ein einteiliges Gehäuse vorgesehen wird, ist es bevorzugt, wenn die Fixiermittel zum lösbaren Festlegen der Messeinrichtung durch gleichzeitige Ausrichtung der Messeinrichtung als Rastmittel und/oder Aufklipsmittel zum bevorzugt formschlüssigen Festlegen der Messeinrichtung am Gehäuse des Heißluftgebläses unter Federwirkung ausgebildet sind. Dabei ist es besonders zweckmäßig, wenn ein für die Messeinrichtung bzw. deren Funktionsfähigkeit hierzu unkritischer Bereich des Gehäuses der Heißlufteinrichtung, zumindest abschnittsweise, mit Hilfe von, bevorzugt zwei, Schenkeln der Fixiermittel umgreifbar ist, wobei die Schenkel zum Festlegen der Messeinrichtung bevorzugt federelastisch gespreizt werden. Zusätzlich oder alternativ können die Fixiermittel derart ausgebildet sein, dass diese in eine entsprechende Befestigungsschiene des Heißluftgebläses formschlüssig eingeschoben werden können - bevorzugt derart, dass am Ende des translatorischen Verschiebevorgangs eine Überführung in eine Rastposition erfolgt, in die die Fixiermittel bevorzugt formschlüssig einfedern.

Besonders zweckmäßig ist es, wenn die Messeinrichtung, insbesondere in einem rückwärtigen, eine Bedienperson der Heißluftpistole zugewandten Bereich Temperaturanzeigemittel, beispielsweise ein Display, noch weiter bevorzugt mit LED-Elementen umfasst, um eine mittels der Messeinrichtung gemessene Oberflächentemperatur und/oder eine, vorzugsweise einstellbare, später noch zu erläuternde Solltemperatur anzuzeigen. Zusätzlich oder alternativ kann die Messeinrichtung weiterbildungsgemäß eine Schnittstelle umfassen, zum Übertragen eines zur gemessenen temperaturproportionalen Temperatursignals, insbesondere eines digitalen Temperatursignals an eine Elektronik des Heißluftgebläses, welche dann vorzugsweise Temperaturanzeigemittel umfasst, um die gemessene Temperatur und/oder eine über die Schnittstelle übertragene, vorzugsweise vom Benutzer einstellbare Solltemperatur im Bereich des Heißluftgebläses anzuzeigen.

Besonders zweckmäßig ist es, wenn die Messeinrichtung hinsichtlich ihrer Energieversorgung autark ist, also, vorzugsweise im Gehäuse der Messeinrichtung eine Energiequelle vorgesehen oder vorsehbar ist, beispielsweise ein Akkumulator oder eine Batterie. Zusätzlich oder alternativ kann die Messeinrichtung derart ausgebildet sein, insbesondere mit einer Schnittstelle ausgestattet sein, dass sie mit einer Energiequelle des Heißluftgebläses koppelbar ist bzw. bevorzugt automatisch gekoppelt wird beim Festlegen an dem Heißluftgebläse.

Weiter bevorzugt ist es, wenn die Messeinrichtung Eingabemittel, ganz besonders bevorzugt in Form eines Wippschalters umfasst, um eine Solltemperatur (Maximaltemperatur) einstellen zu können, über die hinaus eine Oberfläche mittels des Heißluftgebläses bevorzugt nicht erhitzt wird, wobei es besonders zweckmäßig ist, wenn diese eingestellte, insbesondere ausgewählte Solltemperatur auf fakultativen Temperaturanzeigemitteln der Messeinrichtung und/oder des Heißluftgebläses anzeigbar ist. Es hat sich besonders vorteilhaft herausgestellt, wenn die Messeinrichtung Logikmittel aufweist, die die mittels der Messmittel der Messeinrichtung gemessene Oberflächentemperatur mit der Solltemperatur vergleichen und ein Vergleichsignal ausgeben.

Dabei ist es besonders zweckmäßig, wenn weiterbildungsgemäß Mittel zur Anzeige bzw. Signalisierung des Vergleichsignals vorgesehen sind, so dass für den Benutzer ein Über- und/oder Unterschreiten und/oder bevorzugt auch ein Einhalten der Solltemperatur optisch und/oder akustisch signalisiert bzw. angezeigt wird. Ganz besonders zweckmäßig ist es dabei, wenn das Vergleichssignal so gestaltet ist, dass ein Maß für das Über- und/oder Unterschreiten signalisierbar ist.

Letzteres Merkmal kann insbesondere dadurch realisiert werden, dass das Maß des Überschreitens durch eine unterschiedliche Signalintensität, beispielsweise heller oder dunkler signalisiert wird und/oder durch die Ansteuerung einer unterschiedlichen Anzahl von Signalisierungselementen, beispielsweise LEDs einer LED-Reihe, wobei noch weiter bevorzugt zwischen Über- und Unterschreiten durch unterschiedlich farbige Signalisierungselemente, insbesondre LEDs unterschieden werden kann, beispielsweise kann die Farbe rot ein Überschreiten der Solltemperatur anzeigen, wobei das Maß des Überschreitens mit zunehmender Anzahl von angesteuerten LEDs größer ist. Analog kann ein Unterschreiten mittels grünen LEDs angezeigt werden, wobei die Anzahl der angesteuerten LEDs das Maß des Unterschreitens angeben kann. Das Einhalten der Solltemperatur kann z.B. mittels einer grünen LED signalisiert werden.

Besonders zweckmäßig ist es, wenn sich derartige Signalisierungsmittel zum Signalisieren des Über- und/oder Unterschreitens, insbesondere eines Maß des Über- und/oder Unterschreitens der Solltemperatur entlang eines Pistolenlaufes (Auslassrohres) erstreckenden Oberseite der Messeinrichtung erstrecken.

Zusätzlich oder alternativ zu dem Vorsehen von Signalisierungsmitteln zum Signalisieren des Über- und/oder Unterschreitens der Solltemperatur können solche an dem Heißluftgebläse vorgesehen werden, wobei dann geeignet über eine Schnittstelle das Vergleichssignal von den Vergleichsmitteln an einer Elektronik des Heißluftgebläses übertragbar sein sollte.

Die Erfindung führt auch auf ein, vorzugsweise als Heißluftpistole ausgebildetes Heißluftgebläse umfassend ein Gehäuse sowie Mittel zum Erzeugen eines aus einem Heißluftauslass ausströmenden Heißluftstroms. Hierzu umfasst die Heißluftpistole bevorzugt ein Gebläse und eine entsprechende Heizung zum Erwärmen des Luftstroms. Erfindungsgemäß ist nun vorgesehen, dass das Heißluftgebläse eine pyrometrische Messeinrichtung gemäß dem Anspruch 1 umfasst, die lösbar an dem Heißluftgebläse festgelegt ist.

Die Messeinrichtung ist bevorzugt ausgestaltet, wie zuvor auch in verschiedenen Weiterbildungen im Detail beschrieben. Ganz wesentlich ist, dass die Messeinrichtung im an dem Heißluftgebläse festgelegten Zustand so ausgerichtet ist, dass mit dieser eine Temperatur einer Oberfläche in einem Bereich vor dem Heißluftauslass, nämlich in einem Arbeitsbereich mit Abstand zum Heißluftgebläse erfassbar ist. Grundsätzlich ist es in nicht erfindungsgemäßen Anordnungen möglich, dass die Messeinrichtung mittels einer geeigneten Schwenkeinrichtung relativ zum Heißluftauslass verschwenkbar ist - erfindungsgemäß ist jedoch eine Ausbildung, bei der dieser Schwenkwinkel durch eine entsprechende Ausbildung von Fixiermitteln festgelegt ist.

Die Messeinrichtung ist bevorzugt mit Steuermitteln ausgestattet, die ausgebildet und bestimmt sind, das Heißluftgebläse, insbesondere eine Heizeinrichtung des Heißluftgebläses derart anzusteuern, dass eine vorgegebene oder vorzugsweise manuell vorgebbare Solltemperatur gehalten wird, insbesondere nicht über- und/oder unterschritten wird, wobei die Ist-Temperatur für diese Regelung von der Messeinrichtung erfasst wird.

Das erfindungsgemäße Heißluftgebläse umfasst eine gemeinsame Zieleinrichtung für die Messeinrichtung und das Heißluftgebläse, die so ausgebildet ist, dass mit dieser gleichzeitig der optimale Messabstand zwischen dem zu erhitzenden Objekt und der Messeinrichtung und der optimale Arbeitsabstand des Heißluftgebläses zu dem zu erhitzenden Objekt bestimmt werden kann, wobei Messeinrichtung und Heißluftgebläse so aufeinander abgestimmt sind, dass die Messeinrichtung ein Messgenauigkeitsoptimum im optimalen Arbeitspunkt hat bzw. an der Stelle, die den optimalen Arbeitsabstand zum Heißluftgebläse, insbesondere gemessen entlang einer Längsachse der Hauptauslassströmung aufweist. Erfindungsgemäß umfasst die Zieleinrichtung Lichtstrahlenerzeugungsmittel zum Erzeugen von mindestens zwei winklig zueinander abgestrahlten Lichtstrahlen, die sich in einem Treffpunkt, der innerhalb der Hauptauslassströmung, insbesondere auf deren Längsachse, insbesondere deren Längsmittelachse liegt treffen, wobei dieser Treffpunkt an einer Position liegt, die in dem vorerwähnten optimalen Messabstand zur Messeinrichtung und dem optimalen, vom Hersteller definierten Arbeitsabstand zum Heißluftgebläse liegt. Der Benutzer wird intuitiv das Heißluftgebläse auf das Objekt zu bewegen oder von diesem Objekt entfernen, bis der Treffpunkt auf dem Objekt zum Liegen kommt. An jeder Position, wo dies nicht der Fall ist, sieht der Benutzer mehrere Lichtstrahlen und er ist bestrebt, diese im Treffpunkt auf dem Objekt zusammenzuführen.

Die erfindungsgemäße Zieleinrichtung ist an der Messeinrichtung vorgesehen, kann aber in nicht erfindungsgemäßen Anordnungen am Heißluftgebläse vorgesehen werden. Auch ist es denkbar, bei nicht erfindungsgemäßen Anordnungen jeweils mindestens eine Lichtquelle am Heißluftgebläse und an der Messeinrichtung vorzusehen.

Die Erfindung führt auch auf die Verwendung einer pyrometrischen Messeinrichtung in der zuvor beschriebenen Ausgestaltung zum Anordnen an einem Heißluftgebläse, nämlich zum lösbaren Festlegen mit Hilfe von Fixiermitteln, zum Erfassen einer Oberflächentemperatur eines mit dem Heißluftgebläse zu erhitzenden Objektes, wobei die Messeinrichtung, unmittelbar durch den Fixier-, d.h. Festlegungsvorgang auf einen Bereich, nämlich einen Arbeitsbereich des Heißluftgebläses vor dem Heißluftauslass des Heißluftgebläses ausgerichtet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig.1: eine schematische Darstellung eines als Heißluftpistole ausgebildeten Heißluftgebläses, in einer Seitenansicht mit einer daran angeordneten Messeinrichtung zum berührungslosen Messen der Oberflächentemperatur eines mit der Heißluftpistole zu erhitzenden Objekts,
- Fig. 2: eine schematische Draufsicht auf eine Heißluftpistole mit einer daran festgelegten Messeinrichtung,
- Fig. 3: ein mögliches Schaltbild einer Messeinrichtung, die keine eigenen Temperaturanzeigemittel aufweist, sondern bei welcher die gemessenen Daten über ein entsprechendes Interface an eine Elektronik der Heißluftpistole übergeben werden, und
- Fig. 4: ein alternatives Schaltbild einer Messeinrichtung mit integrierten Temperaturanzeigemitteln.

In den Figuren werden gleiche Elemente und Elemente mit der gleichen Funktion mit den gleichen Bezugszeichen gekennzeichnet.

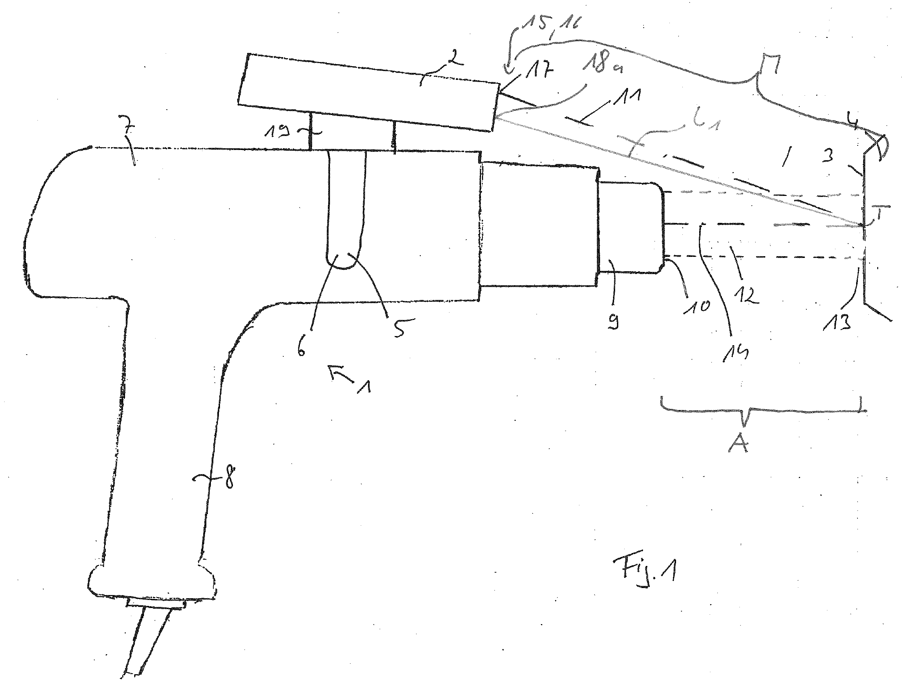

In Fig. 1 ist in einer schematisierten Ansicht eines als Heißluftpistole ausgebildeten Heißluftgebläses 1 mit daran festgelegter Messeinrichtung 2 zum berührungslosen Messen der Temperatur einer Oberfläche 3 eines mittels der Heißluftpistole 1 zu erhitzenden Objektes 4 gezeigt. In dem gezeigten Ausführungsbeispiel ist die Messeinrichtung 2 mit Hilfe von zwei Federschenkel 5 umfassenden Fixiermitteln 6 an einem Gehäuse 7 der Heißluftpistole 1 festgelegt.

In nicht erfindungsgemäßen Anordnungen ist eine integrale Ausbildung der Heißluftpistole 1 mit einer Messeinrichtung 2 möglich, beispielsweise in dem Messeinrichtung 2 und Heißluftpistole 1 ein gemeinsames Gehäuse aufweisen.

Die Heißluftpistole 1 umfasst einen Haltegriff 8 und ein sich näherungsweise rechtwinklig dazu erstreckendes Ausblasrohr 9 mit einem vorderseitigen Heißluftauslass 10. Denkbar ist es, dass unterschiedliche Düsen auf diesen Heißluftauslass 10 aufsteckbar sind, um die Ausströmungscharakteristik der ausgeblasenen heißen Luft verändern zu können.

Aus Fig. 1 ist zu erkennen, dass die Messeinrichtung 2 derart ausgerichtet ist, dass eine Messachse 11 der Messeinrichtung 1 eine Hauptauslassströmung 12, deren Querschnittsfläche idealisiert der Heißluftauslassquerschnittsfläche entspricht, in einem Arbeitsbereich 13 schneidet. In dem gezeigten Ausführungsbeispiel ist der idealisierte Zustand dargestellt, dass im Arbeitsbereich 13 (Auftreffstelle auf das Objekt 4) eine gedachte Mittelachse 14 (Hauptströmungsachse) der Hauptauslassströmung 12 geschnitten wird. In dem gezeigten Ausführungsbeispiel ist der Arbeitsbereich 13 etwa 10 cm von dem Heißluftauslass 10 entfernt.

Die pyrometrische, in dem gezeigten Ausführungsbeispiel ausschließlich auf Basis von Thermoelementen arbeitende bzw. messende Messeinrichtung 2 umfasst eine Zieleinrichtung 15, die sich in dem gezeigten Ausführungsbeispiel unterhalb einer Einlassöffnung im Gehäuse der Messeinrichtung 2 für die zu messende Wärmestrahlung befindet. Die Zieleinrichtung 15 umfasst in dem gezeigten Ausführungsbeispiel zwei Lichtquellen 18a, 18b, von denen in Fig. 1 nur eine vordere sichtbar bzw. nur eine Lichtquelle 18a angedeutet ist. Die beiden Lichtquellen 18a, 18b strahlen jeweils einen Lichtstrahl L1, L2 ab, wobei in der Ansicht gemäß Fig. 1 nur der Lichtstrahl L1 der Lichtquelle 18a zu sehen ist. Die beiden Lichtstrahlen L1, L2 treffen sich in einem Treffpunkt T, der sich in dem gezeigten Ausführungsbeispiel auf dem Objekt 4 befindet. Der Treffpunkt T befindet sich auf der Mittelachse der Hauptauslassströmung 12, und zwar in einem optimalen Arbeitsabstand A zum Heißluftgebläse 1.

Anders ausgedrückt ist das Heißluftgebläse 1 gemessen entlang der Hauptauslassströmung 12, bevorzugt gemessen entlang der Mittelachse 14, um den optimalen Arbeitsabstand A beabstandet vom Treffpunkt T der Lichtstrahlen L1, L2. Der optimale Arbeitsabstand wird vom Hersteller angegeben und zeichnet sich dadurch aus, dass zur Vermeidung eines unmittelbaren Kontaktes zwischen dem Heißluftgebläse und dem Objekt ein Sicherheitsabstand eingehalten wird, der jedoch so gewählt ist, dass die Streuverluste der Heißluftströmung noch verstellbar sind, das heißt, dass der Wärmeverlust auf dem Weg zwischen Heißluftgerät und Objekt akzeptabel ist. Der Treffpunkt T ist gleichzeitig beabstandet um den optimalen Messabstand M von der Messeinrichtung 2, bevorzugt gemessen zwischen der Einlassöffnung 17 und dem Treffpunkt T, wobei alternativ auch die Länge der winkelhalbierenden der Lichtstrahlen L1, L2 herangezogen werden könnte.

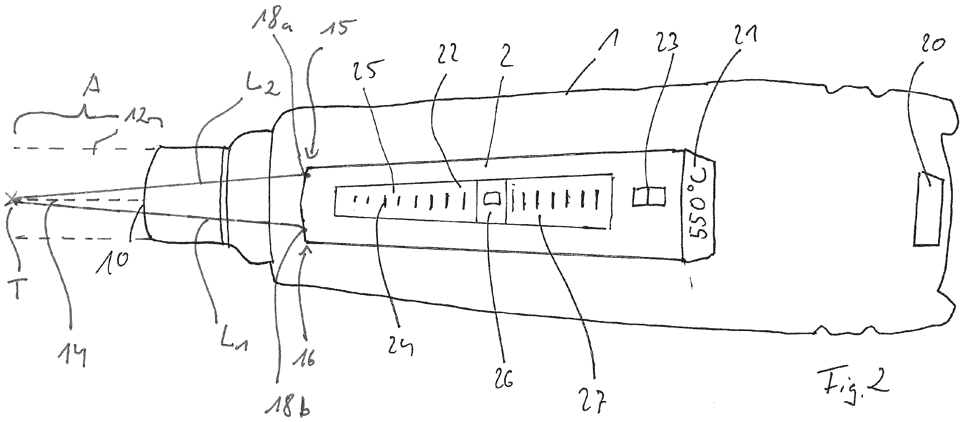

Die Zieleinrichtung 15 wird nun anhand von Fig. 2, die ein Heißluftgebläse in einer Ansicht von oben zeigt näher erläutert. Aus Fig. 2 wird deutlich, dass die Zieleinrichtung 15 zwei in Richtung der Breitenerstreckung des Heißluftgebläses 1 voneinander beabstandete Lichtquellen 18a, 18b, hier zwei LEDs aufweist, die jeweils einen Lichtstrahl L1, L2 abstrahlen, die winklig zueinander verlaufen und die sich im Treffpunkt T treffen, der auf der Mittelachse 14 liegt, und zwar im optimalen, vom Hersteller definierten bzw. festgelegten Arbeitsabstand A zum Heißluftauslass 10. Der Abstand zwischen dem Treffpunkt T und der Messeinrichtung 2 (gemessen entlang der Messachse 11) stellt den optimalen Messabstand dar, in dem der vorliegenden Messeinrichtung 2 die genausten Ergebnisse erzielt werden - d.h. die Messeinrichtung ist auf diese Entfernung M (optimaler Messabstand) ausgelegt.

Wie erläutert, ist die Messeinrichtung 2 nach dem Aufsetzen auf das Heißluftgebläse 1 am vorgeschriebenen Ort bereits korrekt ausgerichtet, so dass automatisch die Temperatur im Arbeitsbereich 13 gemessen wird. Bei nicht erfindungsgemäßen Anordnungen können der Messeinrichtung 2 an der Messeinrichtung und/oder der Heißluftpistole zugeordnete Winkeleinstellmittel zugeordnet werden, mit denen die Winkelposition der Messeinrichtung 2 relativ zu dem Heißluftauslass der Heißluftpistole einstellbar bzw. justierbar ist. In der erfindungsgemäßen Ausführungsform sind solche Einstellmittel nicht vorgesehen.

Der mit dem Bezugszeichen 19 gekennzeichnete Bereich ist erfindungsgemäß starr, d.h. nicht verstellbar ausgebildet. Fig. 2 zeigt ein Heißluftgebläse 1 in einer Ansicht von oben. Zu erkennen ist in der Zeichnungsebene links ein Heißluftauslass 10. Rückseitig ist ein Display 20 vorgesehen, welches die Heißlufttemperatur anzeigt.

Bei Bedarf kann, je nach Ausgestaltung der Messeinrichtung 2 bzw. einer fakultativ vorgesehenen Schnittstelle auf diesem Display 20 auf die Temperatur der Oberfläche 3 des Objektes 4 angezeigt werden. In dem gezeigten Ausführungsbeispiel ist die Messeinrichtung 2 mit eigenen Temperaturanzeigemitteln 21 ausgestattet, die auf einer dem Benutzer zugewandten Rückseite der Messeinrichtung 2 vorgesehen sind. Zusätzlich verfügt die Messeinrichtung 2 über Signalisierungsmittel 22 zum Signalisieren, hier anzeigen des Über- und Unterschreitens einer über Eingabemittel 23 angezeigten Solltemperatur, die bei Bedarf zusätzlich angezeigt werden kann auf den Temperaturanzeigemitteln und/oder auf dem Display 20 (fakultativ) der Heißluftpistole 1.

Zu erkennen ist, dass die Signalisierungsmittel 22 als LED Reihe, umfassend eine Vielzahl von LEDs 24 oder anderen Signalelementen umfassen. Die Anzahl der die eine oder andere Richtung erleuchteten LEDs 24 ist ein Maß für die Temperaturabweichung der Objektoberfläche von der eingestellten Solltemperatur. In einem vorderen Bereich 25 sind die LEDs beispielsweise rotfarbig und signalisieren ein Überschreiten der Solltemperatur; Je mehr LEDs der LED Reihe erleuchtet sind, desto größer ist die Abweichung. In einem mittleren Bereich 26 wird beispielsweise mit einer grünen LED das Einhalten eines Solltemperaturbereichs signalisiert und in einem hinteren Bereich 27 kann durch die Ansteuerung einer entsprechenden Anzahl von, beispielsweise blauen LEDs 24 das Maß eines Unterschreitens der Solltemperatur angezeigt werden.

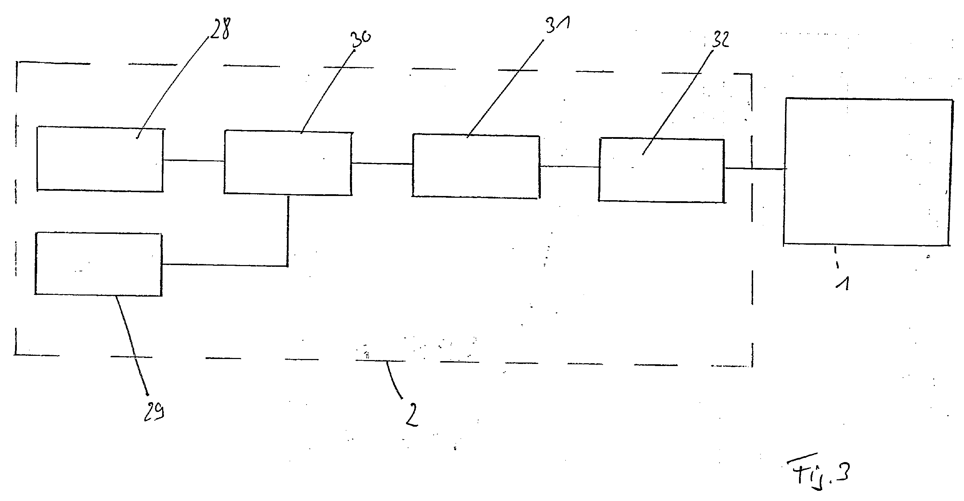

Fig. 3 zeigt stark schematisiert einen möglichen Schaltplan für die Elektronik/Elektrik einer Messeinrichtung 2 für eine Heißluftpistole 1.

Gezeigt sind Messmittel 28 mit einem Temperatursensor, beispielsweise einem Thermopile-Sensor sowie Laserstrahlmittel 29. Diese sind elektrisch leitend mit einem Analogdigitalwandler-Baustein 30 verbunden, welcher wiederum signalleitend mit einem Mikorprozessor 31 verbunden ist, der wiederum signalleitend mit einer Schnittstelle 32 (Interface) verbunden ist, mit welchem die Messeinrichtung 2 signalübertragend mit einer Elektronik des Heißluftgebläses 1 verbindbar ist, beispielsweise um auf deren Display Messwerte anzuzeigen. Gegebenenfalls kann über eine derartige Schnittstelle auch die Spannungsversorgung sichergestellt werden, was vorteilhaft ist, da sowohl auf einfache Weise Niederspannung abgezweigt werden kann - in diesem Fall entfällt die Notwendigkeit zum Vorsehen einer autarken Energieversorgung beispielsweise über Akkumulatoren in der Messeinrichtung 2.

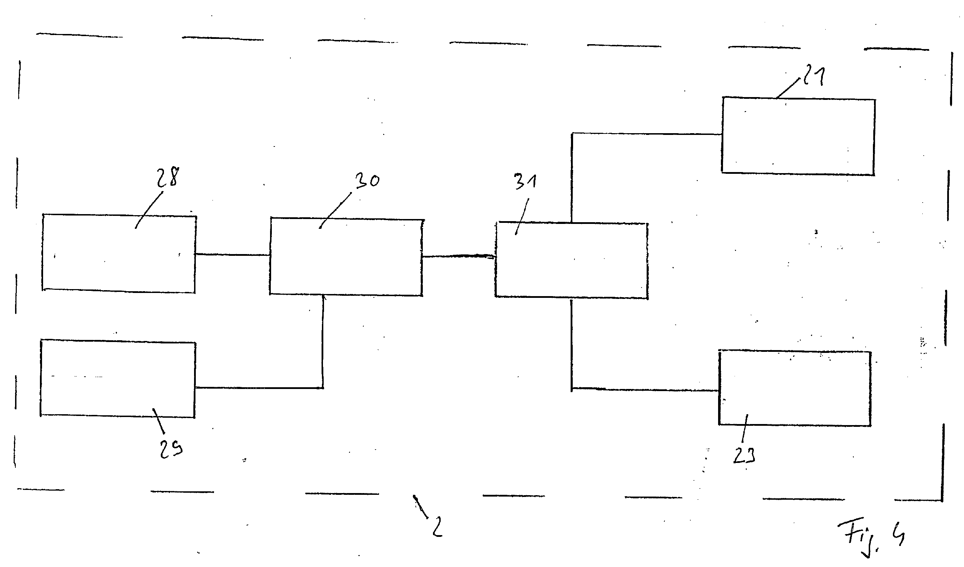

Fig. 4 zeigt eine alternative Ausführungsform an. Gezeigt ist eine Messeinrichtung 2 mit Messmitteln 28 und Laserstrahlmitteln 29, die an ein A/D-Wandlerbaustein 30 angeschlossen sind, der mit einem Mikroprozessor 31 signalleitend verbunden ist. Der Mikroprozessor 31 verbunden mit Eingabemitteln 23 zum Einstellen einer Solltemperatur sowie mit in der Messeinrichtung 2 integralen Temperaturanzeigemitteln 21 zur Anzeige der gemessenen Objekttemperatur sowie bevorzugt auch der eingestellten Solltemperatur.

### Bezugszeichenliste

- 1: Heißluftgebläse
- 2: Messeinrichtung
- 3: Oberfläche
- 4: Objekt
- 5: Federschenkel
- 6: Fixiermittel
- 7: Gehäuse
- 8: Haltegriff
- 9: Ausblasrohr
- 10: Heißluftauslass
- 11: Messachse
- 12: Hauptauslassströmung
- 13: Arbeitsbereich
- 14: Mittelachse
- 15: Zieleinrichtung
- 16: Lichtstrahlenerzeugungsmittel
- 17: Einlassöffnung
- 18a: Lichtquelle
- 18b: Lichtquelle
- 19: Bereich
- 20: Display
- 21: Temperaturanzeigemittel
- 22: Signalisiermittel
- 23: Eingabemittel
- 24: LEDs
- 25: vorderer Bereich
- 26: mittlerer Bereich
- 27: hinterer Bereich
- 28: Messmittel
- 29: Laserstrahlmittel
- 30: A/D-Wandler
- 31: Mikroprozessor
- 32: Schnittstelle

- A: optimaler Arbeitsabstand
- M: optimaler Messabstand
- T: Treffpunkt

## Patentansprüche

1. Messeinrichtung (2), die zum lösbaren Festlegen an einem der Messeinrichtung (2) zugeordneten Heißluftgebläse ausgebildet ist, wobei die Messeinrichtung (2) aufweist
ein Gehäuse und Messmittel (28) zum berührungslosen Messen einer Oberflächentemperatur eines mit dem Heißluftgebläse (1) erhitzbaren Objektes (4) entlang einer Messachse (11), wobei
die Messeinrichtung (2) mit Fixiermitteln derart ausgebildet ist, dass in einem an dem Heißluftgebläse (1) angeordneten Zustand die Messeinrichtung (2) zum Erfassen der Oberflächentemperatur in einem Bereich (19) vor einem Heißluftauslass (10) des Heißluftgebläses (1) ausgerichtet ist,
die Messeinrichtung (2) eine gemeinsame Zieleinrichtung (15) für die Messeinrichtung (2) und das Heißluftgebläse (1) zur gleichzeitigen Bestimmung eines optimalen Messabstandes (M) zwischen der Messeinrichtung (2) und dem Objekt (4) und eines vom Hersteller des Heißluftgebläses vorgegebenen, optimalen Arbeitsabstandes (A) des Heißluftgebläses (1) zu dem zu erhitzenden Objekt (4) aufweist, wobei der optimale Messabstand (M) die Entfernung ist, auf die die Messeinrichtung ausgelegt ist und bei der das Messergebnis die größte Genauigkeit aufweist,
die Zieleinrichtung (15) Lichtstrahlenerzeugungsmittel (16) zum Erzeugen von mindestens zwei winklig zueinander verlaufenden Lichtstrahlen aufweist, die sich in an dem Heißluftgebläse (1) angeordneten Zustand der Messeinrichtung (2) in einem Treffpunkt (T) in einem Bereich (19) vor dem Heißluftgebläse (2) treffen, wobei der in einer Hauptauslassströmung (12) des Heißluftgebläses liegende Treffpunkt (T) den optimalen Mess-, sowie Arbeitsabstand (A,M) zum Objekt (4) darstellt, und
die Messeinrichtung (2) als auf das Heißluftgebläse aufsteckbares Gerät ausgebildet ist, und wobei die Fixiermittel derart starr ausgebildet sind, dass sie die Messeinrichtung (2) in einem an dem Heißluftgebläse (1) angeordneten Zustand relativ zur Hauptauslassströmung (12) derart um einen festgelegten Kippwinkel kippen, dass die Messachse (11) die Hauptauslassströmung im Treffpunkt (T) schneidet.

2. Messeinrichtung (2) nach Anspruch 1, wobei
die Lichtstrahlenerzeugungsmittel (16) zwei Lichtquellen (18a,18b) zur Erzeugung jeweils eines der Lichtstrahlen umfassen, wobei die Lichtquellen (18a,18b) derart angeordnet und/oder mit einer Optik (4) zusammenwirken, dass die Lichtstrahlen winklig zueinander verlaufen und sich in dem Treffpunkt (T) treffen.

3. Messeinrichtung (2) nach Anspruch 1, wobei
die Lichtstrahlenerzeugungsmittel (6) eine einzige Lichtquelle umfassen, der eine Optik derart zugeordnet ist, dass die winklig zueinander verlaufenden Lichtstrahlen resultieren.

4. Messeinrichtung (2) nach einem der Ansprüche 2 oder 3, wobei mindestens eine der Lichtquellen (18a,18b) oder sämtliche Lichtquellen (18a,18b) als LED, als Laserstrahlquelle, oder als Laser-LED ausgebildet ist/sind.

5. Messeinrichtung (2) nach einem der vorhergehenden Ansprüche, Wobei die Lichtstrahlenerzeugungsmittel (16) durch eine entsprechende Anordnung von Lichtquellen (18a,18b) und/oder eine entsprechende Ausbildung und Anordnung einer fakultativen Optik (4) derart konfiguriert sind, dass der Treffpunkt (T) der Lichtstrahlen von dem Heißluftauslass (10) des Gebläses um eine Strecke aus einem Wertebereich zwischen 1cm und 30cm, zwischen 2cm und 20cm, zwischen 2cm und 15cm, zwischen 5cm und 15cm, zwischen 5cm und 10cm, oder zwischen 5cm und 7cm, beabstandet ist.

6. Messeinrichtung (2) nach einem der vorhergehenden Ansprüche, wobei die einen pyroelektrischen Sensor oder einen Thermopilesensor umfassende Messeinrichtung (2) zum Messen von Oberflächentemperaturen aus einem Temperaturbereich zwischen 20°C und 700°C, oder von über 350°C und/oder über 450°C und/oder über 600°C ausgebildet ist.

7. Messeinrichtung (2) nach einem der vorhergehenden Ansprüche, Wobei die Fixiermittel als Rastmittel und/oder Aufklipsmittel zum formschlüssigen Festlegen der Messeinrichtung (2) am Gehäuse (7) des Heißluftgebläses (1) unter einer Federwirkung, oder als Aufklipsmittel mit mindestens zwei das Gehäuse (7) in einem hitzeunkritischen Bereich (19), zumindest abschnittsweise, umgreifenden Schenkeln ausgebildet sind, und/oder dass die Fixiermittel der Messeinrichtung (2) zum translatorischen Einschieben in eine Befestigungsschiene des Heißluftgebläses (1) ausgebildet sind.

8. Messeinrichtung (2) nach einem der vorhergehenden Ansprüche, wobei
die Messeinrichtung (2) Temperaturanzeigemittel (21) zum Anzeigen einer mittels des Messadapters gemessenen Temperatur und/oder eine Schnittstelle (32) zum Übertragen eines Temperatursignals an das Heißluftgebläse (1) aufweist.

9. Messeinrichtung (2) nach einem der vorhergehenden Ansprüche, wobei
im Gehäuse der Messeinrichtung (2) eine Energiequelle, insbesondere ein Ackumulator, zum Betreiben der Messeinrichtung (2) und/oder ein mit dem Stromnetz über ein Kabel verbindbares Netzteil vorgesehen ist, und/oder
die Messeinrichtung (2) eine Schnittstelle zum Koppeln mit dem Heißluftgebläse (1) zum Betreiben der Messeinrichtung (2) mit einer Energiequelle des Heißluftgebläses (1) aufweist.

10. Messeinrichtung (2) nach einem der vorhergehenden Ansprüche, wobei
die Messeinrichtung (2) Eingabemittel (23) zum Einstellen oder Auswählen einer Solltemperatur sowie Logikmittel aufweist, die die gemessene Oberflächentemperatur mit der Solltemperatur vergleichen und ein Vergleichssignal ausgeben.

11. Messeinrichtung (2) nach Anspruch 10, wobei
das Vergleichssignal an signalleitend mit den Logikmitteln verbundene Signalisierungsmittel (22) übermittelbar ist, die ein Über- und/oder Unterschreiten und/oder Einhalten der Solltemperatur optisch und/oder akustisch signalisieren.

12. Messeinrichtung (2) nach einem der Ansprüche 10 oder 11, wobei
die Signalisierungsmittel (22) Mittel zum Signalisieren eines Über- und/oder Unterschreitungsmaßes umfassen.

13. Messeinrichtung (2) nach einem der Ansprüche 10 bis 12, wobei
sich die Signalisierungsmittel (22) entlang einer Gehäuseoberseite der Messeinrichtung (2) erstrecken.

14. Messeinrichtung (2) nach einem der Ansprüche 10 bis 13, wobei die Logikmittel signalleitend mit einer Schnittstelle (32) zur Übermittlung des Vergleichssignals an eine Elektronik des Heißluftgebläses (1) verbunden sind.

15. Heißluftgebläse (1) mit
einem Gehäuse (7);
Mitteln zum Erzeugen eines aus einem Heißluftauslass (10) ausströmenden Heißluftstroms; und
der Messeinrichtung (2) gemäß Anspruch 1, die mit den Fixiermitteln gemäß Anspruch 1 an dem Heißluftgebläse (1) angeordnet werden kann.

## Claims

1. Measuring device (2), which is designed to be detachably fixed to a hot air blower assigned to the measuring device (2), the measuring device (2) comprising
a housing and measuring means (28) for contactless measurement of a surface temperature of an object (4) that can be heated with the hot air blower (1) along a measuring axis (11), wherein
the measuring device (2) is designed with fixing means in such a way that, when it is arranged on the hot air blower (1), the measuring device (2) is aligned for detecting the surface temperature in a region (19) in front of a hot air outlet (10) of the hot air blower (1), the measuring device (2) comprises a common target device (15) for the measuring device (2) and the hot air blower (1) for simultaneous determination of an optimal measuring distance (M) between the measuring device (2) and the object (4) and an optimal working distance (A) between the hot air blower (1) and the object (4) to be heated, which working distance is specified by the manufacturer of the hot air blower, with the optimal measuring distance (M) being the distance for which the measuring device is designed and at which the measuring result has the greatest accuracy,
the target device (15) comprises light beam generating means (16) for generating at least two light beams running at an angle to one another, which, when the measuring device (2) is arranged on the hot air blower (1), converge at a meeting point (T) in a region (19) in front of the hot air blower (2), with the meeting point (T) located in a main outlet flow (12) of the hot air blower representing the optimum measuring and working distance (A, M) to the object (4), and
the measuring device (2) is designed as a device that can be attached to the hot air blower, and wherein
the fixing means are designed to be so rigid that they tilt the measuring device (2), in a state arranged on the hot air blower (1), relative to the main outlet flow (12) by a fixed tilting angle such that the measuring axis (11) intersects the main outlet flow at the meeting point (T).

2. Measuring device (2) according to claim 1, wherein
the light beam generating means (16) comprise two light sources (18a, 18b) for generating one of the light beams in each case, wherein the light sources (18a, 18b) are arranged and/or interact with optics (4) in such a way that the light beams run at an angle to one another and converge at the meeting point (T).

3. Measuring device (2) according to claim 1, wherein
the light beam generating means (6) comprise a single light source, to which optics are assigned in such a way that the light beams running at an angle to one another are produced.

4. Measuring device (2) according to either claim 2 or claim 3, wherein
at least one of the light sources (18a, 18b) or all of the light sources (18a, 18b) is/are designed as an LED, as a laser beam source, or as a laser LED.

5. Measuring device (2) according to any of the preceding claims, wherein
the light beam generating means (16) are configured by a corresponding arrangement of light sources (18a, 18b) and/or a corresponding design and arrangement of optional optics (4) in such a way that the meeting point (T) of the light beams is spaced apart from the hot air outlet (10) of the blower by a distance from a value range between 1 cm and 30 cm, between 2 cm and 20 cm, between 2 cm and 15 cm, between 5 cm and 15 cm, between 5 cm and 10 cm, or between 5 cm and 7 cm.

6. Measuring device (2) according to any of the preceding claims, wherein
the measuring device (2) comprising a pyroelectric sensor or a thermopile sensor is designed to measure surface temperatures from a temperature range between 20°C and 700°C, or above 350°C and/or above 450°C and/or above 600°C.

7. Measuring device (2) according to any of the preceding claims, wherein
the fixing means are formed as locking means and/or clipping means for positively attaching the measuring device (2) to the housing (7) of the hot air blower (1) by means of a spring effect, or as clipping means with at least two legs enclosing the housing (7) in a heat-uncritical region (19), at least in parts thereof, and/or the fixing means of the measuring device (2) are formed for translatory insertion into a fastening rail of the hot air blower (1).

8. Measuring device (2) according to any of the preceding claims, wherein
the measuring device (2) comprises temperature display means (21) for displaying a temperature measured by means of the measuring adapter and/or an interface (32) for transmitting a temperature signal to the hot air blower (1).

9. Measuring device (2) according to any of the preceding claims, wherein
there is an energy source, in particular an accumulator, in the housing of the measuring device (2) for operating the measuring device (2), and/or a power pack that can be connected to the power grid via a cable, and/or
the measuring device (2) comprises an interface for coupling to the hot air blower (1) for operating the measuring device (2) with an energy source of the hot air blower (1).

10. Measuring device (2) according to any of the preceding claims, wherein
the measuring device (2) comprises input means (23) for setting or selecting a target temperature and logic means which compare the measured surface temperature with the target temperature and output a comparison signal.

11. Measuring device (2) according to claim 10, wherein
the comparison signal can be transmitted to signaling means (22) which are connected to the logic means in a signal-conducting manner and which optically and/or acoustically signal that the target temperature has been exceeded and/or has not been reached and/or has been maintained.

12. Measuring device (2) according to either claim 10 or claim 11, wherein
the signaling means (22) comprise means for signaling an overshoot and/or undershoot measurement.

13. Measuring device (2) according to any of claims 10 to 12, wherein
the signaling means (22) extend along a housing top side of the measuring device (2).

14. Measuring device (2) according to any of claims 10 to 13, wherein
the logic means are connected in a signal-conducting manner to an interface (32) for transmitting the comparison signal to electronics of the hot air blower (1).

15. Hot air blower (1) comprising
a housing (7);
means for generating a stream of hot air flowing out of a hot air outlet (10); and
the measuring device (2) according to claim 1, which can be arranged on the hot air blower (1) with the fixing means according to claim 1.

## Revendications

1. Dispositif de mesure (2) qui est réalisé pour la fixation amovible à une soufflante d'air chaud associée au dispositif de mesure (2), dans lequel le dispositif de mesure (2) comprend
un boîtier et des moyens de mesure (28) pour la mesure sans contact d'une température de surface d'un objet (4) pouvant être chauffé avec la soufflante d'air chaud (1) le long d'un axe de mesure (11), dans lequel
le dispositif de mesure (2) est réalisé avec des moyens de fixation de telle manière que dans un état agencé au niveau de la soufflante d'air chaud (1), le dispositif de mesure (2) soit orienté pour la détection de la température de surface dans une zone (19) avant une sortie d'air chaud (10) de la soufflante d'air chaud (1),
le dispositif de mesure (2) comprend un dispositif cible (15) commun pour le dispositif de mesure (2) et la soufflante d'air chaud (1) pour la détermination simultanée d'une distance de mesure (M) optimale entre le dispositif de mesure (2) et l'objet (4) et d'une distance de travail (A) optimale prédéfinie par le fabricant de la soufflante d'air chaud de la soufflante d'air chaud (1) par rapport à l'objet (4) à chauffer, dans lequel la distance de mesure (M) optimale est l'éloignement, sur lequel le dispositif de mesure est conçu et pour lequel le résultat de mesure présente la plus grande précision,
le dispositif cible (15) comprend des moyens de génération de faisceau de lumière (16) pour la génération d'au moins deux faisceaux de lumière s'étendant en angle l'un par rapport à l'autre qui se rencontrent dans un état agencé au niveau de la soufflante d'air chaud (1) du dispositif de mesure (2) dans un point de rencontre (T) dans une zone (19) avant la soufflante d'air chaud (2), dans lequel le point de rencontre (T) se trouvant dans un écoulement de sortie principal (12) de la soufflante d'air chaud représente la distance de mesure ainsi que de travail (A, M) optimales par rapport à l'objet (4), et
le dispositif de mesure (2) est réalisé comme appareil enfichable sur la soufflante d'air chaud,
et dans lequel
les moyens de fixation sont réalisés de manière rigide de telle manière qu'ils basculent le dispositif de mesure (2) dans un état agencé au niveau de la soufflante d'air chaud (1) par rapport à l'écoulement de sortie principal (12) d'un angle de basculement fixé de telle manière que l'axe de mesure (11) coupe l'écoulement de sortie principal dans le point de rencontre (T).

2. Dispositif de mesure (2) selon la revendication 1, dans lequel
les moyens de génération de faisceau de lumière (16) comportent deux sources de lumière (18a, 18b) pour la génération respectivement d'un des faisceaux de lumière, dans lequel les sources de lumière (18a, 18b) sont agencées et/ou coopèrent avec une optique (4) de telle manière que les faisceaux de lumière s'étendent en angle l'un par rapport à l'autre et se rencontrent dans le point de rencontre (T).

3. Dispositif de mesure (2) selon la revendication 1, dans lequel
les moyens de génération de faisceau de lumière (6) comportent une seule source de lumière, à laquelle est associée une optique de telle manière qu'il résulte les faisceaux de lumière s'étendant en angle l'un par rapport à l'autre.

4. Dispositif de mesure (2) selon l'une des revendications 2 ou 3, dans lequel
au moins une des sources de lumière (18a, 18b) ou toutes les sources de lumière (18a, 18b) est ou sont réalisée(s) comme DEL, comme source de faisceau laser, ou comme DEL laser.

5. Dispositif de mesure (2) selon l'une des revendications précédentes, dans lequel
les moyens de génération de faisceau de lumière (16) sont configurés par un agencement correspondant de sources de lumière (18a, 18b) et/ou une réalisation et un agencement correspondants d'une optique facultative (4) de telle manière que le point de rencontre (T) des faisceaux de lumière soit espacé de la sortie d'air chaud (10) de la soufflante d'une étendue d'une plage de valeurs entre 1 cm et 30 cm, entre 2 cm et 20 cm, entre 2 cm et 15 cm, entre 5 cm et 15 cm, entre 5 cm et 10 cm, ou entre 5 cm et 7 cm.

6. Dispositif de mesure (2) selon l'une des revendications précédentes, dans lequel
le dispositif de mesure (2) comprenant un capteur pyroélectrique ou un capteur thermopile est réalisé pour la mesure de températures de surface d'une plage de température entre 20 °C et 700 °C, ou de plus de 350 °C et/ou plus de 450 °C et/ou plus de 600 °C.

7. Dispositif de mesure (2) selon l'une des revendications précédentes, dans lequel
les moyens de fixation sont réalisés comme moyens d'encliquetage et/ou moyens de clipsage pour la fixation à complémentarité de formes du dispositif de mesure (2) au boîtier (7) de la soufflante d'air chaud (1) sous l'action du ressort, ou comme moyens de clipsage avec au moins deux branches entourant au moins par sections le boîtier (7) dans une zone non critique à la chaleur (19), et/ou que les moyens de fixation du dispositif de mesure (2) sont réalisés pour l'enfoncement par translation dans un rail de fixation de la soufflante d'air chaud (1).

8. Dispositif de mesure (2) selon l'une des revendications précédentes, dans lequel
le dispositif de mesure (2) comprend des moyens d'affichage de température (21) pour l'affichage d'une température mesurée au moyen de l'adaptateur de mesure et/ou une interface (32) pour la transmission d'un signal de température à la soufflante d'air chaud (1).

9. Dispositif de mesure (2) selon l'une des revendications précédentes, dans lequel
dans le boîtier du dispositif de mesure (2) une source d'énergie, en particulier un accumulateur, est prévue pour le fonctionnement du dispositif de mesure (2) et/ou un bloc d'alimentation reliable au réseau électrique par le biais d'un câble, et/ou
le dispositif de mesure (2) comprend une interface pour le couplage avec la soufflante d'air chaud (1) pour le fonctionnement du dispositif de mesure (2) avec une source d'énergie de la soufflante d'air chaud (1).

10. Dispositif de mesure (2) selon l'une des revendications précédentes, dans lequel
le dispositif de mesure (2) comprend des moyens d'entrée (23) pour le réglage ou la sélection d'une température de consigne ainsi que des moyens logiques qui comparent la température de surface mesurée avec la température de consigne et émettent un signal de comparaison.

11. Dispositif de mesure (2) selon la revendication 10, dans lequel
le signal de comparaison peut être transmis aux moyens de signalisation (22) reliés de manière à conduire le signal aux moyens logiques qui signalent de manière optique et/ou acoustique un dépassement et/ou une non-atteinte et/ou un respect de la température de consigne.

12. Dispositif de mesure (2) selon l'une des revendications 10 ou 11, dans lequel
les moyens de signalisation (22) comportent des moyens pour la signalisation d'un degré de dépassement et/ou de non-atteinte.

13. Dispositif de mesure (2) selon l'une des revendications 10 à 12, dans lequel
les moyens de signalisation (22) s'étendent le long d'un côté supérieur de boîtier du dispositif de mesure (2).

14. Dispositif de mesure (2) selon l'une des revendications 10 à 13, dans lequel
les moyens logiques sont reliés de manière à conduire le signal à une interface (32) pour la transmission du signal de comparaison à une électronique de la soufflante d'air chaud (1).

15. Soufflante d'air chaud (1) avec
un boîtier (7) ;
des moyens pour la génération d'un courant d'air chaud sortant d'une sortie d'air chaud (10) ; et
le dispositif de mesure (2) selon la revendication 1 qui peut être agencé avec les moyens de fixation selon la revendication 1 à la soufflante d'air chaud (1).
